# EUROPEAN PATENT APPLICATION

(11) **EP 3 808 907 A1**
(43) Date of publication of application: **21.04.2021**
(21) Application number: 19819766.7
(22) Date of filing: 11.06.2019
(51) Int. Cl.: E04B 1/19

(54) **LIGHT SPACE LATTICE STRUCTURE**

(30) Priority: 14.06.2018 CN 201810615351
(71) Applicant: Northwestern Polytechnical University, Xian, Shanxi 710072 (CN)
(72) Inventor: GAO, Tong, Shaanxi 710072 (CN); ZHANG, Weihong, Shaanxi 710072 (CN); MENG, Liang, Shaanxi 710072 (CN); SHI, Jianxiong, Shaanxi 710072 (CN); FAN, Chunhui, Shaanxi 710072 (CN)
(74) Representative: Hofmann, Matthias
(86) International application number: PCT/CN2019/090614
(87) International publication number: WO 2019/238019

(57) **Abstract**

Disclosed is a light space lattice structure, comprising a number N of interconnected unit cells, each unit cell includes an upper polygonal frame (a), a lower polygonal frame (c) and a side bar system (b); the upper polygonal frame (a) has the same structure as the lower polygonal frame (c), and the side bar system (b) comprises a plurality of connecting bars which connect, according to the same connecting principle, the upper polygonal frame (a) and the lower polygonal frame (c). The light space lattice structure improves the bending resistance and torsion resistance of the structure, a through hole is formed in the interior thereof, which facilitates the functional requirement, and the porosity of the structure is larger than that of a traditional honeycomb structure.

## Description

The present application claims the priority to Chinese Patent Application No. 201810615351.1, titled "LIGHT SPACE LATTICE STRUCTURE", filed with the China National Intellectual Property Administration on June 14, 2018, which is incorporated herein by reference in its entirety.

### FIELD

The present application relates to the technical field of engineering structures, and in particular to a light space lattice structure.

### BACKGROUND

Most of traditional lightweight structures are of a foam and honeycomb sandwich structure, which has a great stiffness in simply one direction, and has poor bending and torsion resistance. Meanwhile, due to a close property of the internal space thereof, when a temperature gradient is present inside the structure, the different thermal conductivity of the internal air and the structure may cause an extra thermal deformation of the structure, which may further cause structural failure and even destruction.

### SUMMARY

In view of the shortcomings of the traditional lightweight structure, a light space lattice structure is provided. An internal space thereof is open, and the light space lattice structure has through holes. Meanwhile, on the basis of meeting the strength requirement in a direction perpendicular to an xoy plane, the light space lattice structure has good bending and torsion resistance.

The technical problem solved by the present application is to be realized by the following technical solutions:
a light space lattice structure includes a number N of unit cells, and the unit cells are connected through nodes of the unit cells. The unit cells are extended in x, y, z directions to form the light space lattice structure, and each unit cell is composed of an upper polygonal frame **a,** a lower polygonal frame **c** and a side bar system **b.** The light space lattice structure includes a number **N** of unit cells which are interconnected. Each unit cell includes an upper polygonal frame **a,** a lower polygonal frame **c,** and a side bar system **b.** The upper polygonal frame **a** and the lower polygonal frame **c** have the same structure, and the side bar system **b** includes multiple connecting bars, which connect the upper polygonal frame **a** and the lower polygonal frame **c** based on same connecting principle. The connecting principle is that a connecting point of each connecting bar is an end point, a midpoint or a point of arbitrary equal segments of each side of the upper polygonal frame **a** and the lower polygonal frame **c,** and each connecting bar is connected obliquely. The upper polygonal frame **a** and the lower polygonal frame **c** are regular long polygons, and the regular long polygons have an even number of sides. When N unit cells are connected with each other, vertex angles of adjacent unit cells are connected, or the adjacent unit cells are connected by a polygonal combination frame, which allows the unit cells extended in x, y, z directions to become the space lattice structure.

Preferably, a cross section of the upper polygonal frame **a,** the lower polygonal frame **c** and each bar in the side bar system **b** of the unit cell is of a circular shape.

Preferably, an axis of each bar in the side bar system **b** is a straight line.

Preferably, the upper polygonal frame **a** and the lower polygonal frame **c** are regular hexagons.

Preferably, the connecting point of each bar in the side bar system **b** is an end point, a midpoint and a point of arbitrary equal segments of each side of the upper polygonal frame **a** and the lower polygonal frame **c.**

Preferably, the N unit cells in the xoy plane may be extended in a plane polygon mosaic manner of (6, 6, 6) and (6, 6, 3, 3).

Preferably, the light space lattice structure is formed by adopting additive manufacturing technology.

Preferably, two adjacent unit cells are connected by vertex angles of the polygonal frames, and the sides of the adjacent unit cells are connected with each other.

Preferably, two adjacent unit cells are connected by vertex angles of the polygonal frames, and the sides of the adjacent unit cells are not connected with each other, a triangle or quadrilateral is formed between adjacent unit cells by the vertex angles.

Preferably, the polygonal combination frame is a single triangle, a combination of triangles, a single square, a combination of squares, a combination of triangles and squares, and a combination of squares and hexagons.

Preferably, the cross section of each connecting bar in the upper polygonal frame **a,** the lower polygonal frame **c,** and the side bar system **b** may be circle or square. Or, various forms of curved bars may be used.

Preferably, the upper polygonal frame **a** and the lower polygonal frame **c** are respectively formed by multiple connecting bars, and the cross-sections of the connecting bars of the side bar system are of a round or square shape. The connecting bars are straight bars or arc bars.

Preferably, when n hexagonal unit cells are not directly connected with each other, a triangular frame without a side bar is used for connection.

Preferably, N dodecagonal unit cells, hexagonal unit cells and quadrilateral unit cells are mixed and connected in a plane for extending. When hexagonal unit cells and quadrilateral unit cells are mixed and extended in a plane, a triangle is sandwiched among them.

Preferably, a polygonal combination frame with four sides or more than four sides has a side bar or no side bar.

Preferably, the side bar has an arbitrary cross-sectional shape.

Preferably, the side bar is a straight bar or a curved bar.

Preferably, two connecting bars are led out from each connecting point of the upper polygonal frame **a** and the lower polygonal frame **c,** and the two connecting points of the upper polygonal frame **a** and the lower polygonal frame **c** for connecting the same connecting bar do not correspond axially.

Preferably, the connecting point of the upper polygonal frame **a** is an upper connecting point, and the connecting point of the lower polygonal frame **c** is a lower connecting point. In the two adjacent upper connecting points along the circumferential direction, the two lower connecting points connected by the two connecting bars led out from the previous upper connecting point are front lower connecting points. The two lower connecting points connected by the two connecting bars led out from the latter upper connecting point are rear lower connecting points. Two front lower connecting points are adjacent along the circumferential direction, two rear lower connecting points are adjacent along the circumferential direction, and two front lower connecting points and two rear lower connecting points are adjacent along the circumferential direction. Or, the two front lower connecting points are spaced from each other, and the two rear lower connecting points are respectively located on the same side of the two front lower connecting points in the circumferential direction, and are respectively adjacent to the two front lower connecting points in the circumferential direction.

Preferably, the two connecting bars led out from the same connecting point have the same length.

Preferably, a connecting bar is led out from each connecting point of the upper polygonal frame **a** and the lower polygonal frame **c,** and the two connecting points of the upper polygonal frame **a** and the lower polygonal frame **c** for connecting the same connecting bar do not correspond axially.

Preferably, the connecting point of the upper polygonal frame **a** is an upper connecting point, and the connecting point of the lower polygonal frame **c** is a lower connecting point. Two lower connecting points connected by two connecting bars led out by two adjacent upper connecting points along the circumferential direction are also adjacent along the circumferential direction.

The light space lattice structure includes a number N of unit cells which are interconnected. Each unit cell includes the upper polygonal frame **a,** the lower polygonal frame **c,** and the side bar system **b.** The upper polygonal frame **a** and the lower polygonal frame **c** have the same structure, and the side bar system **b** includes multiple connecting bars, which connect the upper polygonal frame **a** and the lower polygonal frame **c** based on the same connecting principle. The connecting principle is that a connecting point of each connecting bar is the end point, the midpoint or the point of arbitrary equal segments of each side of the upper polygonal frame **a** and the lower polygonal frame **c,** and the connecting bar is connected obliquely. The upper polygonal frame **a** and the lower polygonal frame **c** are non-regular polygons. When N unit cells are connected with each other, the vertex angles of adjacent unit cells are connected, or the adjacent unit cells are connected by the polygonal combination frame, which allows the unit cells extended in x, y, z directions to become the space lattice structure.

The beneficial effects of the present application:
1. The light space lattice structure provided by the present application improves the bending resistance of the structure by the designing of the connection mode of each bar in the side bar system **b.**
2. The light space lattice structure provided by the present application improves the anti-torsion performance of the structure by the designing of the extension mode of the upper polygonal frame **a** and the lower polygonal frame **c.**
3. The light space lattice structure provided by the present application is provided with through holes therein, which is beneficial to realize the functional requirements.
4. The adoption of such light space lattice structure can realize the lightweight design of the structure. Under the same minimum local size, the light space lattice structure of the present application has a larger porosity than the traditional honeycomb structure.

### BRIEF DESCRIPTION OF THE DRAWINGS

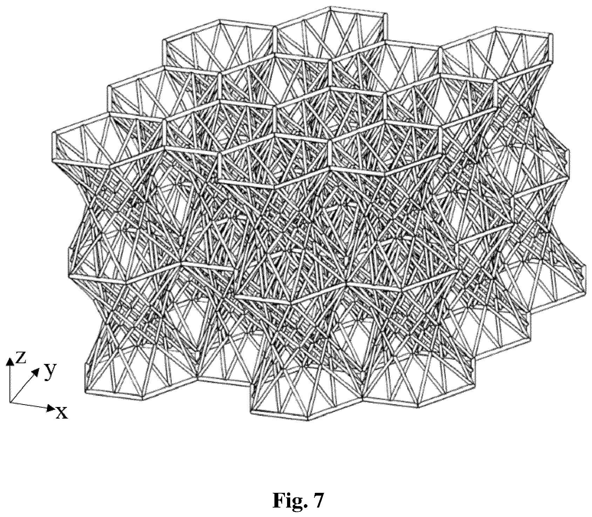

Figures 1 to 7 show a light space lattice structure.
Figure 1 is a schematic diagram of an unit cell of the light space lattice structure of the present application;
Figure 2 is a schematic diagram of another connection mode of the bars in the side bar system **b**;
Figure 3(a) is a schematic diagram of an unit cell of the light space lattice structure of the present application which may be connected and extended in the xoy plane in a plane mosaic manner of (6, 6, 6); Figure 3(b) is a schematic diagram of an unit cell light space lattice structure of the present application which may be connected and extended in the xoy plane in a plane mosaic manner of (6, 6, 3, 3);
Figure 4(a) and Figure 4(b) are schematic diagram of an unit cell of the light space lattice structure of the present application which may be connected and extended in the xoy plane in a plane mosaic manner of (6, 3, 3, 3, 3);
Figure 5(a) and Figure 5(b) are schematic diagram of an unit cell of the light space lattice structure of the present application which may be connected and extended in the xoy plane in a plane mosaic manner of (6, 4, 4, 3);
Figure 6(a) and Figure 6(b) are schematic diagram of an unit cell of the light space lattice structure of the present application which may be connected and extended in the xoy plane in a plane mosaic manner of (12, 6, 4);
Figure 7 is an overall schematic diagram of the light space lattice structure of the present application.

### DETAILED DESCRIPTION

In order to make the technical features, objects and effects of the present application clearer, detailed description will be made in conjunction with the drawings.

As shown in the figures, the present application provides a light space lattice structure, including N interconnected unit cells. Each unit cell includes an upper polygonal frame **a,** a lower polygonal frame **c,** and a side bar system **b.** The upper polygonal frame **a** and the lower polygonal frame c have the same structure, and the side bar system **b** includes multiple connecting bars, which connect the upper polygonal frame **a** and the lower polygonal frame **c** according to the same connecting principle. The connecting principle is that a connecting point of each connecting bar is an end point, a midpoint or a point of arbitrary equal segments of each side of the upper polygonal frame **a** and the lower polygonal frame **c,** and each connecting bar is connected obliquely to increase the bending resistance of the structure.

The above upper polygonal frame **a** and lower polygonal frame **c** are regular long polygons. The regular long polygons refer to regular polygons, and the regular long polygons have an even number of sides. When N unit cells are connected with each other, the vertex angles of adjacent unit cells are connected, or the adjacent unit cells are connected by polygonal combination frame, or the unit cells are connected and extended in x, y, z directions to become the space lattice structure.

It should be noted that the upper polygonal frame **a** and the lower polygonal frame **c** may also adopt non-regular polygons. However, in comparison, the regular polygonal frame bears better force and may provide better anti-torsion performance for the entire lattice structure, which is a preferred solution of the embodiment of the present application.

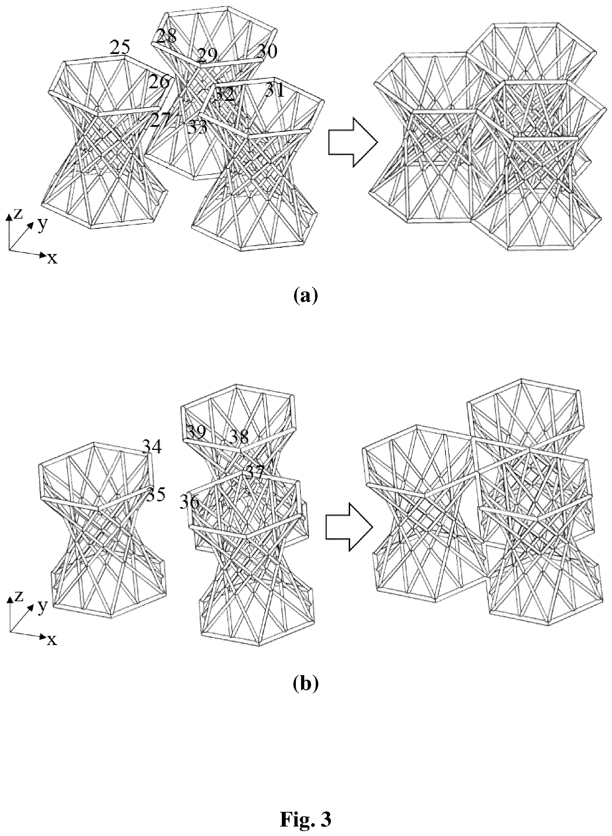

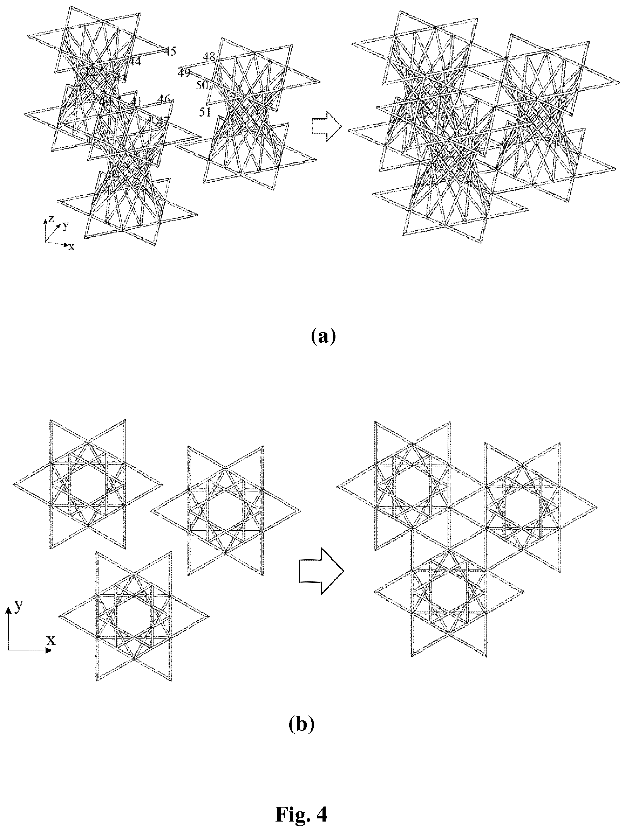

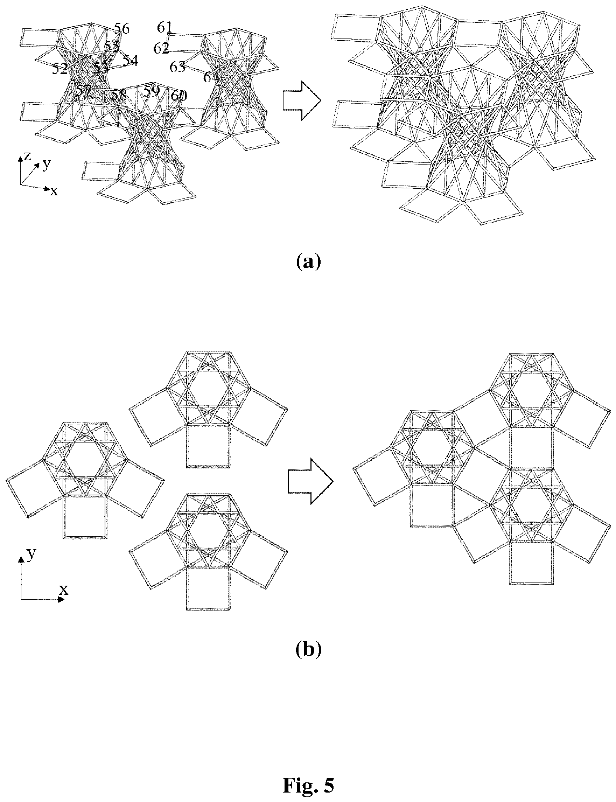

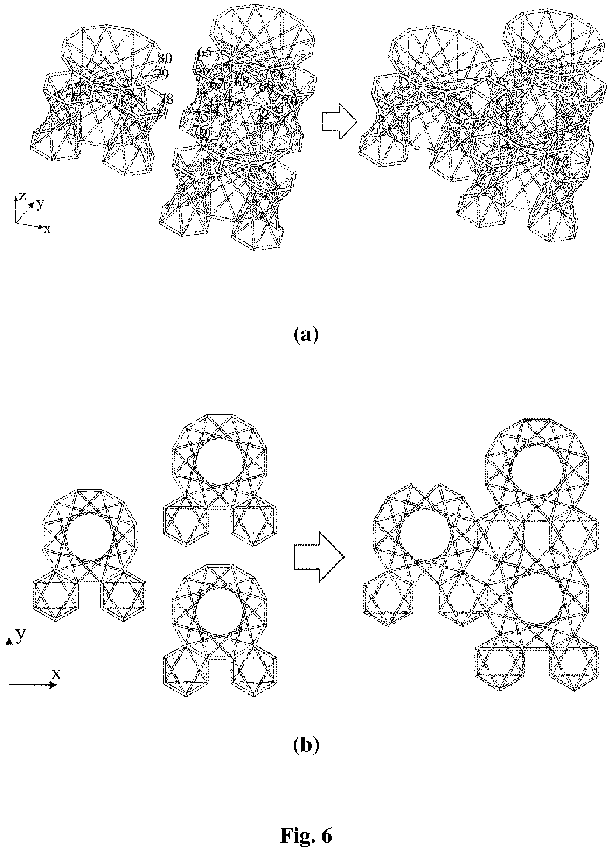

In the entire lattice structure, each unit cell may be connected and extended by different connection schemes. For example, the vertex angles of polygonal frames (the upper polygonal frame A is connected with the upper polygonal frame A, and the lower polygonal frame C is connected with the lower polygonal frame C) may be used for connection, and the sides of adjacent unit cells may be connected with each other, as shown in Figure 3(a). At this time, it may also be understood that the sides of the polygonal frame are directly butted with each other. In fact, in this case, the two butted edges may be one side, that is, two connected unit cells may share the same side. Or, when the vertex angles of the polygonal frame are connected, the edges of adjacent unit cells may not be connected with each other, and the vertex angles form triangles or quadrangles between adjacent unit cells, as shown in Figure 3(b). Or, two adjacent unit cells may not be directly connected, but may be connected by a polygonal combination frame, which may be a single triangle or a combination of triangles (as shown in Figure 4(a) and Figure 4(b)), a single square, a combination of squares or a combination of triangles and squares (as shown in Figure 5(a) and Figure 5(b)), and a combination of squares and hexagons (as shown in Figure 6(a) and Figure 6(b)).

The specific description of the above combinations is as follows.

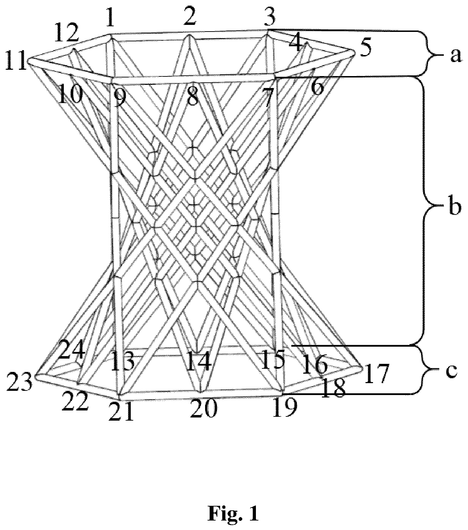

Figure 1 is a schematic diagram of a unit cell of the light space lattice structure of the present application. Referring to Figure 1, the unit cell of the light space lattice structure of the present application includes an upper polygonal frame **a,** a lower polygonal frame **c** and a side bar system **b.** An node 2 is the midpoint of the bar formed by connecting an node 1 and an node 3. An node 4 is the midpoint of the bar formed by connecting the node 3 and an node 5. An node 6 is the midpoint of the bar formed by connecting the node 5 and an node 7. An node 8 is the midpoint of the bar formed by connecting the node 7 and an node 9. An node 10 is the midpoint of the bar formed by connecting the node 9 and an node 11. An node 12 is the midpoint of the bar formed by connecting the node 11 and the node 1. An node 14 is the midpoint of the bar formed by connecting the node 13 and an node 15. An node 16 is the midpoint of the bar formed by connecting the node 15 and an node 17. An node 18 is the midpoint of the bar formed by connecting the node 17 and an node 19. An node 20 is the midpoint of the bar formed by connecting the node 19 and an node 21. An node 22 is the midpoint of the bar formed by connecting the node 21 and an node 23. An node 24 is the midpoint of the bar formed by connecting node 23 and node 13. It should be noted that the above node 2, node 4, node 6, node 8, node 10, node 12, node 14, node 16, node 18, node 20, node 22, node 24 are not limited to the midpoints of their corresponding bars, but they may also be a point of arbitrary equal segments of their corresponding bars. The upper polygonal frame **a** is composed of a bar connected by the node 1 and the node 3, a bar connected by the node 3 and the node 5, a bar connected by the node 5 and the node 7, a bar connected by the node 7 and the node 9, a bar connected by the node 9 and the node 11, a bar connected by the node 11 and the node 1. The lower polygonal frame **c** is composed of a bar connected by the node 13 and the node 15, a bar connected by the node 15 and the node 17, a bar connected by the node 17 and the node 19, a bar connected by the node 19 and the node 21, a bar connected by the node 21 and the node 23, a bar connected by the node 23 and the node 13. The side bar system b includes a bar connected by the node 1 and the node 17, a bar connected by the node 1 and the node 21, a bar connected by the node 2 and the node 18, a bar connected by the node 2 and the node 22, a bar connected by the node 3 and the node 19, a bar connected by the node 3 and the node 23, a bar connected by the node 4 and the node 20, a bar connected by the node 4 and the node 24, a bar connected by the node 5 and the node 21, a bar connected by the node 5 and the node 13, a bar connected by the node 6 and the node 22, a bar connected by the node 6 and the node 14, a bar connected by the node 7 and the node 15, a bar connected by the node 7 and the node 23, a bar connected by the node 8 and the node 16, a bar connected by the node 8 and the node 24, a bar connected by the node 9 and the node 17, a bar connected by the node 9 and the node 13, a bar connected by the node 10 and the node 18, a bar connected by the node 10 and the node 14, a bar connected by the node 11 and the node 15, a bar connected by the node 11 and the node 19, a bar connected by the node 12 and the node 16, a bar connected by the node 12 and the node 20.

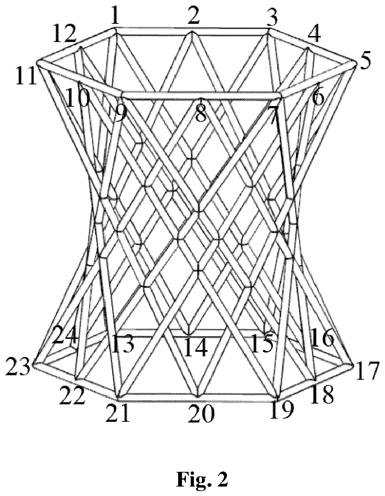

Figure 2 is a schematic diagram of another connection mode of the side bar system **b** in the unit cell of the light space lattice structure of the present application. Referring to Figure 2, the node 2 is the midpoint of the bar formed by connecting the node 1 and the node 3. The node 4 is the midpoint of the bar formed by connecting the node 3 and the node 5. The node 6 is the midpoint of the bar formed by connecting the node 5 and the node 7. The node 8 is the midpoint of the bar formed by connecting the node 7 and the node 9. The node 10 is the midpoint of the bar formed by connecting the node 9 and the node 11. The node 12 is the midpoint of the bar formed by connecting the node 11 and the node 1. The node 14 is the midpoint of the bar formed by connecting the node 13 and the node 15. The node 16 is the midpoint of the bar formed by connecting the node 15 and the node 17. The node 18 is the midpoint of the bar formed by connecting the node 17 and the node 19. The node 20 is the midpoint of the bar formed by connecting the node 19 and the node 21. The node 22 is the midpoint of the bar formed by connecting the node 21 and the node 23. The node 24 is the midpoint of the bar formed by connecting the node 23 and the node 13. It should be noted that the above node 2, node 4, node 6, node 8, node 10, node 12, node 14, node 16, node 18, node 20, node 22, node 24 are not limited to the midpoints of their corresponding bars, but they may also be a point of arbitrary equal segments of their corresponding bars. The connection mode of the side bar system **b** is as follows. The Node 1 and the node 16 are connected to form a bar, the node 1 and the node 22 are connected to form a bar, the node 2 and the node 17 are connected to form a bar, the node 2 and the node 23 are connected to form a bar, the node 3 and the node 18 are connected to form a bar, the node 3 and the node 24 are connected to form a bar, the node 4 and the node 19 are connected to form a bar, the node 4 and the node 13 are connected to form a bar, the node 5 and the node 20 are connected to form a bar, the node 5 and the node 14 are connected to form a bar, the node 6 and the node 21 are connected to form a bar, the node 6 and the node 15 are connected to form a bar, the node 7 and the node 16 are connected to form a bar, the node 7 and the node 22 are connected to form a bar, the node 8 and the node 17 are connected to form a bar, the node 8 and the node 23 are connected to form a bar, the node 9 and the node 18 are connected to form a bar, the node 9 and the node 24 are connected to form a bar, the node 10 and the node 19 are connected to form a bar, the node 10 and the node 13 are connected to form a bar, the node 11 and the node 20 are connected to form a bar, the node 11 and the node 14 are connected to form a bar, the node 12 and the node 15 are connected to form a bar, the node 12 and the node 21 are connected to form a bar. It should be noted that the connection mode of each bar in the side bar system b is not limited to the connection mode described in Figure 1 and Figure 2, and various connection modes may be made according to the connection mode described in Figure 1 and Figure 2.

Figure 3(a) is a schematic diagram of the unit cell of the light space lattice structure of the present application extended in the xoy plane in a plane mosaic manner of (6, 6, 6). Referring to Figure 3(a), in extension, an node 25 coincides with an node 28, an node 26, an node 29 coincide with an node 32, an node 27 coincides with an node 33, and an node 30 coincides with an node 31, so that the unit cell may be extended in the xoy plane. This extension mode improves the anti-torsion performance of the structure, and the structure is provided with through holes therein, which is beneficial to realize the functional requirements. The number of unit cells n may be determined as required. Figure 3(b) is a schematic diagram of the unit cell of the light space lattice structure of the present application extended in the xoy plane in a plane mosaic manner of (6, 6, 3, 3). Referring to Figure 3(b), in extension, an node 34 coincides with an node 39, an node 35 coincides with an node 36, an node 37 coincides with an node 38, so that the unit cell may be extended in the xoy plane. This extension mode improves the anti-torsion performance of the structure, and the structure is internally provided with through holes, which is beneficial to realize the functional requirements. The number of unit cells **n** may be determined as required.

Figure 4(a) and Figure 4(b) are schematic diagrams of the unit cell of the light space lattice structure of the present application extended in the xoy plane in a plane mosaic (6, 3, 3, 3, 3) manner; Figure 4(b) is a top view showing the extension of the light space lattice cell in the xoy plane; Referring to Figure 4(a), each side of the regular hexagonal frame is connected with a regular triangular frame. In extension, an node 42 coincides with an node 40, an node 43 coincides with an node 41, an node 44 coincides with node an 49, an node 45 coincides with an node 48, an node 46 coincides with an node 50, an node 47 coincides with an node 51. The number of unit cells **n** may be determined as required.

Figure 5(a) and Figure 5(b) are schematic diagrams of the unit cell of the light space lattice structure of the present application extended in the xoy plane in a plane mosaic manner of (6, 4, 4, 3); Figure 5(b) is a top view showing the extension of the light space lattice in the xoy plane; Referring to Figure 5(a), each of the three adjacent sides of the regular hexagonal frame is connected with a square frame. In extension, an node 52 coincides with an node 57, an node 53 coincides with an node 58, an node 54 coincides with an node 59, an node 56 coincides with an node 61, an node 55 coincides with an node 62, the node 54 coincides with an node 63, the node 63 coincides with the node 59, an node 64 coincides with an node 60; the number of unit cells **n** may be determined as required.

Figure 6(a) and Figure 6(b) are schematic diagrams of the unit cell of the light space lattice structure of the present application extended in the xoy plane in a plane mosaic manner of (12, 6, 4); Figure 6(b) is a top view showing the extension of the light space lattice cell in the xoy plane; Referring to Figure 6(a), two sides of a regular dodecagon frame are connected with a unit cell of a regular hexagon frame. In extension, an node 65 coincides with an node 80, an node 66 coincides with an node 79, an node 67 coincides with an node 74, an node 68 coincides with an node 73, an node 69 coincides with an node 72, an node 70 coincides with an node 71, an node 75 coincides with an node 78, an node 76 coincides with an node 77; the number of unit cells **n** may be determined as required.

Both the upper polygonal frame **a** and the lower polygonal frame **c** may be formed by a combination of multiple connecting bars. The cross section of the connecting bar and the connecting bar of the side bar system may be round, square or other special shapes. The connecting rods may all be straight bars, of course, they may also be curved bars or bent bars, which may be determined according to the actual situation and related simulation tests. In specific processing, the light space lattice structure provided by the present application may be directly formed by 3D printing technology to simplify the difficulty of processing.

For ease of description, in the light space lattice structure, the surface where the upper polygonal frame **a** is located is called the upper plane, the plane where the lower polygonal frame **c** is located is called the lower plane, and the side bar system is the bar system connecting the upper plane and the lower plane.

As mentioned above, in some embodiments, the upper polygonal frame **a** and the lower polygonal frame **c** of two adjacent unit cells are connected by polygonal combination frames. When the number of sides of the polygonal combination frame is four or more, the polygonal combination frame in this form is similar to the upper polygonal frame **a** and the lower polygonal frame **c** in a single cell structure. At this time, in order to further improve the overall structural performance, a side bar similar to the side bar system **b** may be arranged between the upper and lower polygonal combination frames. The structure of the side bar is consistent with the aforementioned connecting bar, and the connecting principle between the side bar and the polygonal combination frame may also be set with reference to the connecting bar in the side bar system **b.**

In view of the light space lattice structure related to the above embodiments, the connecting principle of each connecting bar in the side bar system **b** will also be described in more detail in the following embodiments of the present application.

The upper polygonal frame **a** and the lower polygonal frame **c** both include multiple connecting points (the connecting points referring to in the detailed description of the drawings), and each connecting point of the upper polygonal frame **a** may be distributed and spaced apart with each other along the circumferential direction, and each connecting point of the lower polygonal frame **c** may also be distributed and spaced apart with each other along the circumferential direction. When the upper polygonal frame **a** and the lower polygonal frame **c** are arranged facing each other in an up-and-down direction, the connecting points of the upper polygonal frame **a** and the connecting points of the lower polygonal frame **c** are in a one-to-one corresponding relationship in the axial direction (i.e., the up-and-down direction). For example, referring to Figure 1, the upper polygonal frame **a** and the lower polygonal frame **c** have the same structure, including twelve connecting points, and the names of each connecting point are shown in the attached drawings. Connecting point 1 corresponds to connecting point 13, and connecting points 2, 3, 4, 5, 6, 7, 8, 9, 10, 11 and 12 correspond to connecting points 14, 15, 16, 17, 18, 19, 20, 21, 22, 23 and 24 respectively. If two corresponding connecting points are connected respectively, a polygonal prism may be formed.

In a scheme, two connecting bars may be led out from each connecting point of the upper polygonal frame **a** and the lower polygonal frame **c,** and the two connecting points connecting the same connecting bar with the upper polygonal frame **a** and the lower polygonal frame **c** do not correspond axially, so that the connecting bars may be kept obliquely.

For ease of description, the connecting point of the upper polygonal frame **a** is an upper connecting point, and the connecting point of the lower polygonal frame **c** is a lower connecting point. In the two adjacent upper connecting points along the circumferential direction, two lower connecting points connected by the two connecting bars led out from the previous upper connecting point are front lower connecting points. Two lower connecting points connected by the two connecting bars led out from the latter upper connecting point are rear lower connecting points.

First, the two front lower connecting points may be adjacent along the circumferential direction, and the two rear lower connecting points may also be adjacent along the circumferential direction. The two front lower connecting points are adjacent to the two rear lower connecting points along the circumferential direction.

For example, referring to Figure 1, the connecting point 1 and connecting point 2 may be selected as the two adjacent connecting points in the circumferential direction of the upper polygonal frame **a.** The connecting point 1 may be connected to the adjacent connecting point 16 and the adjacent connecting point 17. The connecting point 2 may be connected to the adjacent connecting point 18 and the adjacent connecting point 19. By connecting in such order, the connection modes of 1→16(17), 2→18(19), 3→20(21), 4→22(23), 5→24(13), 6→14 (15), 6→16 (17), 8→18 (19), 9→20 (21), 10→22 (23), 11→24 (13), 12 →14 (15) may be formed. In the above example, the lower connecting point connected by the adjacent connecting point 2 downstream of the connecting point 1 in an anti-clockwise direction is also located just downstream of the lower connecting point connected by the connecting point 1 in an anti-clockwise direction. In fact, an opposite structure may also be adopted, that is, the lower connecting point connected by the adjacent connecting point 2 downstream of the connecting point 11 in an anti-clockwise direction may be located upstream of the lower connecting point connected by the connecting point 1 in a clockwise direction .

Secondly, the two front lower connecting points may be spaced from each other, and the two rear lower connecting points are respectively located on the same side of the two front lower connecting points in the circumferential direction, and are respectively adjacent to the two front lower connecting points in the circumferential direction.

For example, still referring to Figure 1, the connecting point 1 and connecting point 2 may be selected as the two adjacent connecting points in the circumferential direction of the upper polygonal frame **a.** The connecting point 1 may be connected to the connecting point 17 and the connecting point 21. The connecting point 2 may be connected to the connecting point 18 and the connecting point 22. The connecting point 18 is located downstream of connecting point 17, which is circumferentially adjacent to connecting point 18, and the connecting point 22 is located downstream of connecting point 21 in a clockwise direction (same in relative directions with 18 and 17) and circumferentially adjacent to connecting point 21. By connecting in such order, the connection modes of 1→17(21), 2→18(22), 3→19 (23), 4→20 (24), 5→21 (13), 6→22 (14), 7→23 (15), 8→24 (16), 9→13 (17), 10→14 (18), 11→15 (19), 12→16 (20) may be formed. In the above example, the lower connecting point connected by the adjacent connecting point 2 downstream of the connecting point 1 in a clockwise direction is also located just downstream of the lower connecting point connected by the connecting point 1 in a clockwise direction. In fact, an opposite structure may also be adopted, that is, the lower connecting point connected by the adjacent connecting point 2 downstream of the connecting point 11 in a clockwise direction can be located upstream of the lower connecting point connected by the connecting point 1 in a clockwise direction. For example, the connecting point 2 may be connected to the connecting point 16 and the connecting point 20 respectively.

In fact, in the scheme that two connecting bars are led out from the same connecting point, it is preferable for the two connecting bars led out from the same connecting point to have a same length. In this way, the stress is more reasonable and the structural strength and stability are higher.

In another scheme, a connecting bar is led out from each connecting point of the upper polygonal frame a and the lower polygonal frame **c,** and the two connecting points connecting the same connecting bar with the upper polygonal frame **a** and the lower polygonal frame **c** do not correspond axially, so that the connecting bars may be kept obliquely.

For ease of description, the connecting point of the upper polygonal frame **a** may be described as an upper connecting point, and the connecting point of the lower polygonal frame **c** may be described as a lower connecting point. Two lower connecting points connected by two connecting bars led out by two adjacent upper connecting points along the circumferential direction are also adjacent along the circumferential direction. For example, still referring to Figure 1, assuming that the connecting point 1 is connected to the connecting point 16, and the connecting point 2 may be connected to the connecting point 15 or the connecting point 17.

Finally, it should be pointed out that: the embodiments of the present application are described above in conjunction with the drawings, but the present application is not limited to the above specific embodiments. The embodiments as described above are merely illustrative rather than limitative. Under the enlightenment of the present application, those skilled in the art can make many forms without departing from the principle of the present application and the protection scope of the claims, all of which fall into the protection of the present application.

## Claims

1. A light space lattice structure, comprising a number **N** of unit cells which are interconnected, **characterized in that**,
each unit cell comprises an upper polygonal frame (a), a lower polygonal frame (c) and a side bar system (b);
the upper polygonal frame (a) and the lower polygonal frame (c) have the same structure, and the side bar system (b) comprises a plurality of connecting bars, which connect the upper polygonal frame (a) and the lower polygonal frame (c) based on same connecting principle;
the connecting principle is that a connecting point of each connecting bar is an end point, a midpoint or a point of arbitrary equal segments of each side of the upper polygonal frame (a) and the lower polygonal frame (c), and the connecting bar is connected obliquely;
the upper polygonal frame (a) and the lower polygonal frame (c) are of regular long polygons, and the regular long polygons have an even number of sides;
when the number **N** of unit cells are connected with each other, vertex angles of adjacent unit cells are connected, or adjacent unit cells are connected by a polygonal combination frame, which allows the number **N** of unit cells extended in x, y, z directions to become the space lattice structure.

2. The light space lattice structure according to claim 1, wherein, two adjacent unit cells are connected by the vertex angles of the polygonal frames, the sides of the adjacent unit cells are connected with each other.

3. The light space lattice structure according to claim 1, wherein, two adjacent unit cells are connected by the vertex angles of the polygonal frames, the sides of the adjacent unit cells are not connected with each other, and a triangle or quadrilateral is formed between adjacent unit cells by the vertex angles.

4. The light space lattice structure according to claim 1, wherein, the polygonal combination frame is a single triangle, a combination of triangles, a single square, a combination of squares, a combination of triangles and squares, and a combination of squares and hexagons.

5. The light space lattice structure according to claim 1, wherein, a cross section of each connecting bar in the upper polygonal frame (a), the lower polygonal frame (c), and the side bar system (b) is circle or square, or a curved bar in various forms is used.

6. The light space lattice structure according to claim 5, wherein, the upper polygonal frame (a) and the lower polygonal frame (c) are formed by a plurality of connecting bars, and the cross sections of the connecting bars of the side bar system are round or square, and the connecting bars are straight bars or arc bars.

7. The light space lattice structure according to claim 1, wherein, a number N of hexagonal unit cells are not directly connected with each other, a triangular frame without a side bar is used for connection.

8. The light space lattice structure according to claim 1, wherein, a number N of dodecagonal unit cells, hexagonal unit cells and quadrilateral unit cells are mixed and connected in a plane for extending;
when the hexagonal unit cells and the quadrilateral unit cells are mixed and extended in a plane, a triangle is sandwiched among the hexagonal unit cells and quadrilateral unit cells.

9. The light space lattice structure according to claim 1, wherein, a polygonal combination frame with four sides or more than four sides has a side bar or no side bar.

10. The light space lattice structure according to claim 1 or 9, wherein, the side bar has an arbitrary cross-sectional shape.

11. The light space lattice structure according to claim 1 or 9, wherein, the side bar is a straight bar or a curved bar.

12. The light space lattice structure according to claim 1, wherein, two connecting bars are led out from each connecting point of the upper polygonal frame (a) and the lower polygonal frame (c), and two connecting points of the upper polygonal frame (a) and the lower polygonal frame (c) for connecting the same connecting bar do not correspond axially.

13. The light space lattice structure according to claim 12, wherein, the connecting point of the upper polygonal frame (a) is an upper connecting point, and the connecting point of the lower polygonal frame (c) is a lower connecting point;
in the two adjacent upper connecting points along the circumferential direction, the two lower connecting points connected by the two connecting bars led out from the previous upper connecting point are front lower connecting points, the two lower connecting points connected by the two connecting bars led out from the latter upper connecting point are rear lower connecting points;
two front lower connecting points are adjacent along the circumferential direction, and two front lower connecting points and two rear lower connecting points are adjacent along the circumferential direction; or, the two front lower connecting points are arranged and spaced from each other, and the two rear lower connecting points are respectively located on the same side of the two front lower connecting points in the circumferential direction, and are respectively adjacent to the two front lower connecting points in the circumferential direction.

14. The light space lattice structure according to claim 12, wherein, the two connecting bars led out from the same connecting point have a same length.

15. The light space lattice structure according to claim 1, wherein, one connecting bar is led out from each connecting point of the upper polygonal frame (a) and the lower polygonal frame (c), and the two connecting points of the upper polygonal frame (a) and the lower polygonal frame (c) for connecting the same connecting bar do not correspond axially.

16. The light space lattice structure according to claim 15, wherein, the connecting point of the upper polygonal frame (a) is an upper connecting point, and the connecting point of the lower polygonal frame (c) is a lower connecting point;
two lower connecting points connected by two connecting bars led out by two adjacent upper connecting points along the circumferential direction are also adjacent along the circumferential direction.

17. A light space lattice structure, comprising a number N of unit cells which are interconnected, and each unit cell comprises an upper polygonal frame (a), a lower polygonal frame (c), and a side bar system (b);
the upper polygonal frame (a) and the lower polygonal frame (c) have the same structure, and the side bar system (b) comprises a plurality of connecting bars, which connect the upper polygonal frame (a) and the lower polygonal frame (c) based on the same connecting principle;
the connecting principle is that a connecting point of each connecting bar is an end point, a midpoint or a point of arbitrary equal segments of each side of the upper polygonal frame (a) and the lower polygonal frame (c), and the connecting bar is connected obliquely;
the upper polygonal frame (a) and the lower polygonal frame (c) are non-regular polygons;
when the number N of unit cells are connected with each other, vertex angles of adjacent unit cells are connected, or the adjacent unit cells are connected by polygonal combination frame, which allows the unit cells extended in x, y, z directions to become the space lattice structure.
